Europäisches Patentamt

European Patent Office

Office européen des brevets

(19)

(11) Numéro de publication: **0 184 519**
**B1**

(12) # FASCICULE DE BREVET EUROPÉEN

(45) Date de publication du fascicule du brevet:
**12.10.88**

(21) Numéro de dépôt: **85402425.4**

(22) Date de dépôt: **06.12.85**

(51) Int. Cl.⁴: **E 05 F 15/10, F 16 H 19/00**

(54) **Motoréducteur pour la commande alternée de deux fonctions, équipant notamment une porte de véhicule automobile.**

(30) Priorité: **07.12.84 FR 8418686**

(43) Date de publication de la demande:
**11.06.86 Bulletin 86/24**

(45) Mention de la délivrance du brevet:
**12.10.88 Bulletin 88/41**

(84) Etats contractants désignés:
**DE GB IT SE**

(56) Documents cité:
**FR-A-2 182 710**
**US-A-3 004 757**

(73) Titulaire: **REGIE NATIONALE DES USINES RENAULT, Boîte postale 103 8-10 avenue Emile Zola, F-92109 Boulogne- Billancourt (FR)**

(72) Inventeur: **Bascou, Jacques, 15, rue de la Fontaine Pleureuse Bazemont, F-78580 Maule (FR)**

(74) Mandataire: **Saint Martin, René, Régie Nationale des Usines Renault Direction des Recherches et Développements Service 0804 8-10, Avenue Emile- Zola, F-92109 Boulogne Billancourt Cedex (FR)**

EP 0 184 519 B1

## Description

La présente invention a pour objet un motoréducteur notamment à moteur électrique permettant d'assurer alternativement la commande motorisée de deux fonctions et comportant un pignon d'entraînement susceptible d'entraîner des câbles.

Les portes latérales de véhicules automobiles comportent divers mécanismes, tels que par exemple un lève-vitre ou une serrure, qui sont de plus en plus souvent susceptible d'être commandées à l'aide d'un dispositif d'assistance électrique. Cette tendance à l'équipement électrique des fonctions mécaniques a bien entendu pour but d'éliminer le maximum de contraintes pour l'utilisateur et notamment de supprimer tout effort d'actionnement de ces mécanismes.

Cette assistance électrique des diverses fonctions nécessite en principe une motorisation pour chacune des fonctions souhaitées. Le brevet US-3 004 757 décrit un mécanisme tel que le définit le préambule de la revendication 1. Toutefois, ce mécanisme nécessite deux actionneurs pour entraîner alternativement l'un ou l'autre des deux câbles flexibles.

La présente invention a pour but de proposer un dispositif permettant d'assurer alternativement l'assistance électrique de la commande de deux fonctions à l'aide d'un motoréducteur unique.

Dans ce but l'invention propose un motoréducteur caractérisé en ce qu'il comporte un boîtier qui reçoit le pignon d'entraînement monté sur l'arbre de sortie du réducteur, susceptible d'engrener alternativement avec l'un ou l'autre des câbles flexibles de type crémaillères, tous deux montés parallèlement dans un baladeur susceptible de se déplacer dans le boîtier, dans un plan perpendiculaire à l'axe du pignon d'entraînement, entre deux positions extrêmes dans chacune desquelles un des deux câbles est en position embrayée avec le pignon d'entraînement tandis que l'autre câble est en position débrayée, et un dispositif d'actionnement du baladeur.

Selon une autre caractéristique de l'invention, et afin de maintenir le baladeur dans l'une de ses deux positions extrêmes sans risque de mouvements intempestifs de celui-ci, le baladeur est monté coulissant dans le boîtier et est muni d'un pion d'actionnement se prolongeant à l'extérieur du boîtier pour coopérer avec le dispositif d'actionnement qui est constitué d'une came montée à rotation sur le boîtier dont le profil coopère avec le pion d'actionnement, et d'un actionneur entraînant ladite came en rotation.

Des modes de réalisation additionnels sont caractérisés dans les revendications dépendantes 4 à 6.

On décrira maintenant l'invention en détail en se référant au dessins annexés dans lesquels:

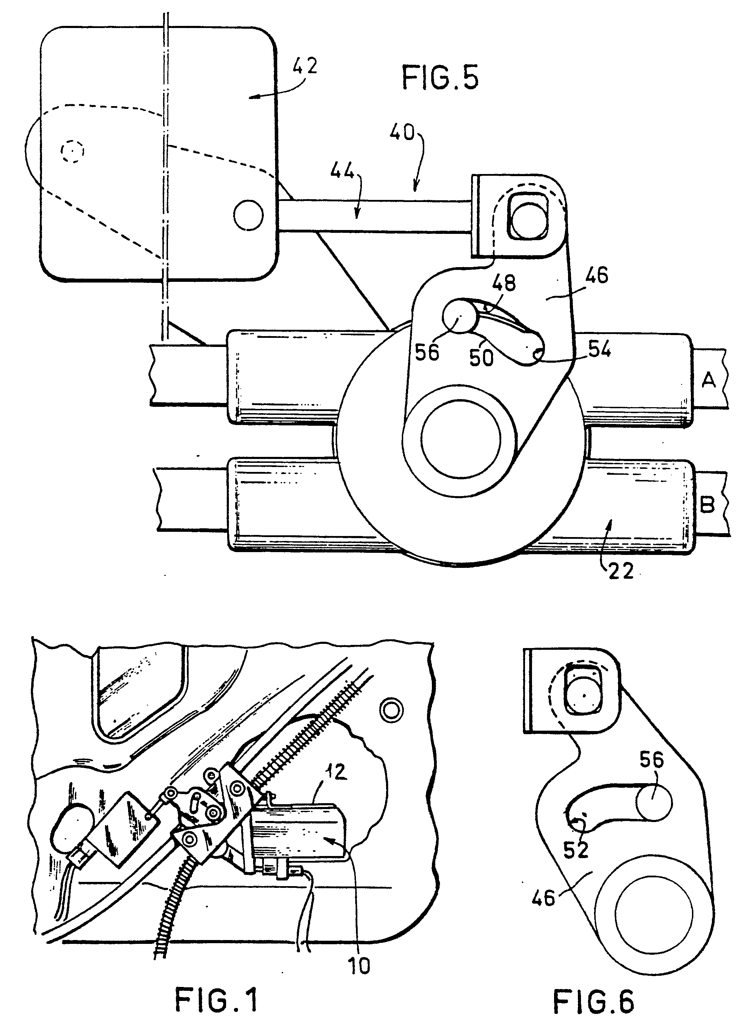

- la figure 1 est une vue générale montrant l'implantation d'un motoréducteur réalisé conformément aux enseignements de la présente invention sur le caisson d'une porte de véhicule automobile;

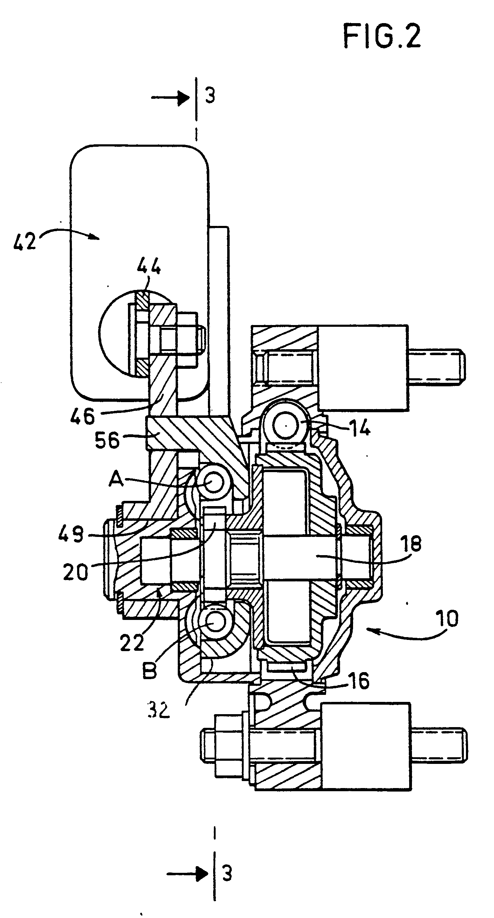

- la figure 2 est une section transversale du motoréducteur de la figure 1;
- la figure 3 est une section du motoréducteur selon la ligne 3 - 3 de la figure 2, le câble inférieur étant représenté en position embrayée;
- la figure 4 est une vue partielle similaire à celle de la figure 3 dans laquelle le câble supérieur est représenté en position embrayée;
- la figure 5 est une vue externe montrant la came de commande du déplacement du baladeur, représentée dans la position correspondante à celle de la figure 3; et
- la figure 6 est une vue partielle, similaire à celle de la figure 5 représentant la came dans la position correspondant à celle illustrée à la figure 4.

On a représenté aux figures, un ensemble motoréducteur (10) comprenant notamment un moteur électrique (12) dont le pignon (14) coopère avec un pignon d'entrée (16) du réducteur. Le pignon d'entrée (16) du réducteur à un étage est monté sur l'arbre de sortie (18) sur lequel est monté le pignon denté d'entraînement (20).

L'arbre de sortie (18) est monté à rotation dans le boîtier (22) de l'ensemble motoréducteur (10).

Conformément à l'invention, le pignon d'entraînement (20) est susceptible d'engrener alternativement avec un premier câble crémaillère A et un second câble crémaillère B. Les câbles crémaillères utilisés dans ce mode de réalisation sont d'un type connu constitué par un câble à filet hélicoïdal guidé de façon rigide à la traction et à la compression dans un tube de guidage (24, 26) respectivement.

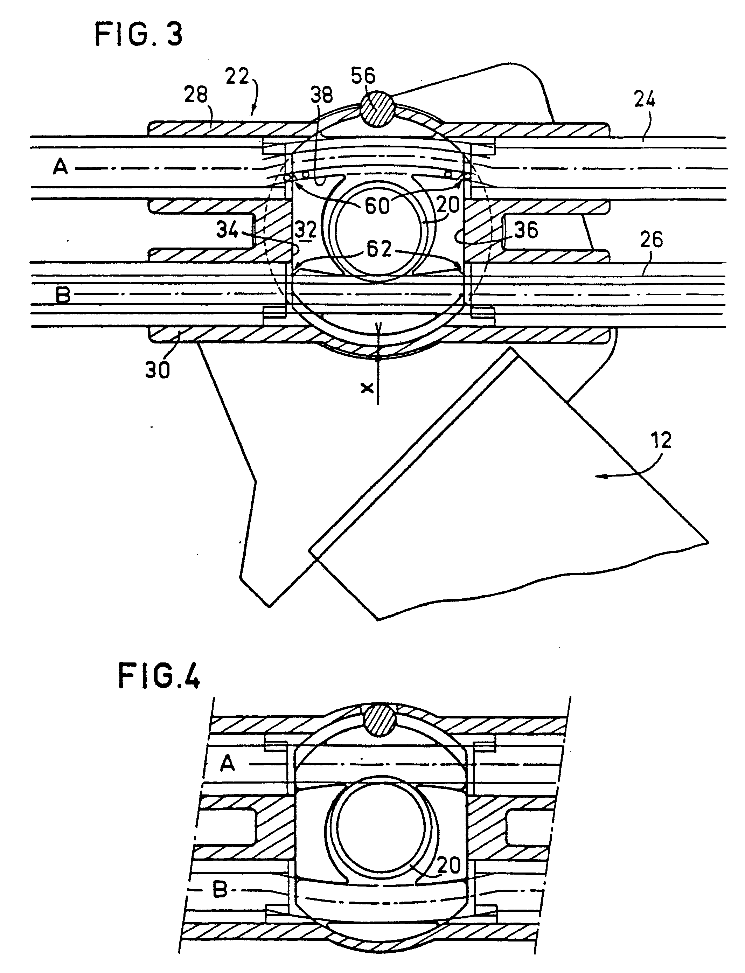

Comme on peut le constater aux figures 3 et 4, les tubes de guidage (24 et 26) des câbles crémaillères A et B sont montés dans des canaux de guidage parallèles (28 et 30) formés dans le boîtier (22).

Les câbles crémaillères A et B sont donc ainsi susceptibles de se déplacer parallèlement à l'intérieur du boîtier (22) sous l'action du pignon d'entraînement (20). Afin d'assurer alternativement l'entraînement de l'un ou l'autre des câbles crémaillères A et B, ceux-ci sont montés parallèlement dans une pièce formant baladeur (32) qui est montée coulissante dans le boîtier (22). Le guidage du baladeur (32) est assuré par deux faces parallèles (34 et 36) formées dans le boîtier (22) de façon à permettre un déplacement du baladeur (32) dans un plan perpendiculaire à l'axe (18) du pignon d'entraînement (20) et dans une direction perpendiculaire à la direction parallèle commune de déplacement des câbles A et B. Comme on peut le constater aux figures 3 et 4, dans lesquelles le baladeur (32) est représenté d'une part en position haute et d'autre part en position basse, celui-ci peut se déplacer d'une distance (x) indiquée à la figure 3. Ce déplacement du baladeur (32) permet d'embrayer et de débrayer alternativement l'un des deux câbles A ou B du pignon d'entraînement (20).

Par exemple à la figure 3, où le baladeur est en position haute, c'est le câble inférieur B qui est en position embrayée tandis que le câble supérieur A est en position débrayée dans laquelle son filet hélicoïdal n'est plus en prise avec les dents du pignon d'entraînement (20), ceci grâce à un légère déformation courbe du câble obtenue par le profil correspondant (38) du baladeur. D'une manière symétrique, à la figure 4, c'est le câble supérieur A qui est en position embrayée le baladeur (32) étant dans sa position basse.

Afin d'assurer l'actionnement du baladeur pour lui faire occuper alternativement ses deux positions extrêmes, le motoréducteur selon la présente invention comporte un dispositif d'actionnement (40).

Le dispositif d'actionnement (40) comprend un actionneur électrique (42) dont la tige de sortie (44) est susceptible de se déplacer longitudinalement et alternativement de gauche à droite en considérant les figures (5 et 6), pour entraîner en rotation une came (46) montée à rotation sur une portion cylindrique (49) du boîtier (22), coaxiale à l'axe de sortie (18) du réducteur.

La came (46) est munie d'un profil de came en creux (48) qui présente sensiblement la forme d'un haricot dont la partie curviligne, centrée sur l'axe de rotation de la came, présente une déflexion (50) de telle sorte que les deux extrémités (52 et 54) de la partie curviligne qui définissent les positions extrêmes occupées par le baladeur soient disposées sur deux rayons différents de la came.

La came (46) coopère avec un pion d'actionnement (56) venu de matière avec le baladeur (32) qui se prolonge à l'extérieur du boîtier (22) pour coopérer avec le profil de came (48) de la came (46) du dispositif d'actionnement (40).

Comme on peut le constater aux figures (5 et 6), la rotation de la came (46) entre ses deux positions extrêmes sous l'action de l'actionneur électrique (42) à pour effet de provoquer un déplacement vertical du pion (56) d'une cote (x) correspondant à la différence entre les deux rayons de la came sur lesquels sont situées les extrémités (52 et 54) du profil (48).

Conformément à un autre aspect de l'invention, le baladeur (32) comporte des moyens permettant d'immobiliser en translation celui des deux câbles crémaillères qui est en position débrayée. Ces moyens on en effet pour but d'éviter tout mouvement axial du câble en position débrayé et ce notamment sous le poids de l'organe dont il assure l'actionnement.

Ces moyens d'immobilisation sont constitués par deux paires de dents (60 et 62) formées sur le baladeur (32) et qui coopèrent alternativement avec le filet hélicoïdal du câble qui est en position débrayée. On n'a pas représenté et on ne décrira pas ici en détail le dispositif de commande électrique permettant d'assurer d'une part la commande de l'actionneur (42) et d'autre part la commande du moteur électrique (12), ce dispositif étant d'une structure classique; on notera toutefois qu'il est souhaitable que ce dispositif comporte un système de temporisation de manière à assurer une alimentation décalée dans le temps de l'actionneur (42) par rapport au moteur électrique (12) afin de permettre de débrayer un des câbles avant de provoquer l'actionnement de l'autre câble par le moteur.

## Revendications

1. Motoréducteur pour la commande alternée de deux fonctions comportant un pignon d'entraînement (20) susceptible d'entraîner des câbles flexibles (A, B), caractérisé en ce qu'il comporte un boîtier (22) qui reçoit le pignon d'entraînement (20), monté sur l'arbre de sortie (18) du réducteur, susceptible d'engrener alternativement avec l'un ou l'autre des câbles flexibles (A, B) de type crémaillères, tous deux montés parallèlement dans un baladeur (32) susceptible de se déplacer dans le boîtier (22), dans un plan perpendiculaire à l'axe (18) du pignon d'entraînement (20), entre deux positions extrêmes dans chacune desquelles un des deux câbles (A, B) est en position embrayée avec le pignon d'entraînement (20) tandis que l'autre câble (B, A) est en position débrayée, et un dispositif d'actionnement (40) du baladeur (32).

2. Motoréducteur selon la revendication 1 caractérisé en ce que le baladeur est monté coulissant dans le boîtier (22) et est muni d'un pion d'actionnement (56) se prolongeant à l'extérieur du boîtier (22) pour coopérer avec le dispositif d'actionnement (40).

3. Motoréducteur selon la revendication 2 caractérisé en ce que le dispositif d'actionnement (40) est constitué d'une came (46) montée à rotation sur ledit boîtier (22) dont le profil (48) coopère avec le pion d'actionnement (56), et d'un actionneur (42) entraînant ladite came (46) en rotation.

4. Motoréducteur selon la revendication 3 caractérisé en ce que le profil de ladite came (46) a sensiblement la forme d'un haricot dont la partie curviligne, centrée sur l'axe de rotation de la came (46), présente une déflexion (50) de telle sorte que ses deux extrémités (52, 54) définissant lesdites positions extrêmes soient disposées sur deux rayons différents de la came.

5. Motoréducteur selon la revendication 1 caractérisé en ce que le baladeur comporte des moyens permettant d'immobiliser en translation celui des câbles crémaillères qui est en position débrayée.

6. Motoréducteur selon la revendication 5 caractérisé en ce que lesdits moyens d'immobilisation sont constitués par des dents (60, 62), formées sur le baladeur qui coopèrent avec le filet hélicoïdal du câble qui est en position débrayée.

## Claims

1. A motor-reducing unit for the alternate control of two functions comprising a drive pinion (20) capable of entraining flexible cables (A, B) characterised in that it comprises a casing (22) which receives the drive pinion (20) mounted on the output shaft (18) of the reducing unit and capable of engaging alternately with one or other of the flexible cables (A, B) of rack type, both being mounted parallel in a moving member (32) capable of being displaced in the casing (22) in a plane perpendicular to the axis (18) of the drive pinion (20) between two limit positions, in each of which one of the two cables (A, B) is in an engaged position with the drive pinion (20) while the other cable (B, A) is in the disengaged position, and a device (40) for actuation of the moving member (32).

2. A motor-reducing unit according to claim 1 characterised in that the moving member is mounted slidably in the casing (22) and is provided with an actuating pin (56) whith extends to the outside of the casing (22) to co-operate with the actuating device (40).

3. A motor-reducing unit according to claim 2 characterised in that the actuating device (40) comprises a cam (46) mounted rotatably on said casing (22), the profile (48) of which co-operates with the actuating pin (56), and an actuator (42) for driving said cam (46) in rotation.

4. A motor-reducing unit according to claim 3 characterised in that the profile of said cam (46) is substantially in the shape of a kidney bean whose curved portion, centred on the axis of rotation of the cam (46), has a deflection (50) such that its ends (52, 54) defining said limit positions are disposed on two different radii of the cam.

5. A motor-reducing unit according claim 1 characterised in that the moving member comprises means for immobilising in respect of translation movement that one of the rack-type cables which is in the disengaged position.

6. A motor-reducing unit according to claim 5 characterised in that said immobilisation means comprise teeth (60, 62) which are formed on the moving member and which co-operate with the helical screwthread of the cable with is in the disengaged position.

## Patentansprüche

1. Motorgetriebe zur abwechselnden Steuerung zweier Funktionen, das ein Antriebsritzel (20) aufweist zum Antrieb flexibler Kabel (A, B), dadurch gekennzeichnet, daß es ein Gehäuse (22) aufweist zur Aufnahme des Antriebsritzels (20), das auf der Ausgangswelle (18) des Getriebes angeordnet ist und abwechselnd mit einem der beiden flexiblen Kabel (A, B) kämmt, die mit Zahnstangen versehen sind und die beide parallel zueinander in einer Schiebemuffe (32) angeordnet sind, die im Gehäuse (22) verschiebbar ist in einer Ebene senkrecht zur Achse (18) des Antriebsritzels (20) zwischen zwei Endstellungen, in denen jeweils eines der Kabel (A, B) in Kupplungsstellung mit dem Antriebsritzel (20) ist während das andere Kabel (B, A) in entkuppelter Stellung ist, sowie eine Betätigungsanordnung (40) für die Muffe (32) aufweist.

2. Motorgetriebe nach Anspruch 1, dadurch gekennzeichnet, daß die Muffe gleitbar im Behälter (22) angeordnet ist und mit einem Betätigungszapfen (56) versehen ist, der sich aus dem Gehäuse (22) nach außen erstreckt, um mit der Betätigungsanordnung (40) zusammenzuwirken.

3. Motorgetriebe nach Anspruch 2, dadurch gekennzeichnet, daß die Betätigungsanordnung (40) aus einem Nocken (46) besteht, der drehbar am Gehäuse (22) angeordnet ist und dessen Aussparung (48) mit dem Betätigungszapfen (56) zusammenvirkt, sowie aus einem Betätigungsteil (42) besteht, das den Nocken (46) in Drehung versetzt.

4. Motorgetriebe nach Anspruch 3, dadurch gekennzeichnet, daß die Aussparung des Nockens (46) im wesentlichen Bohnenform aufweist, dessen gebogener Abschnitt mit dem Mittelpunkt auf der Drehachse des Nockens (46) eine derartige Beugung (50) aufweist, daß die beiden Enden (52, 54), die die Endstellungen bilden, auf zwei unterschiedlichen Radien des Nockens liegen.

5. Motorgetriebe nach Anspruch 1, dadurch gekennzeichnet, daß die Muffe eine Anordnung aufweist, um das Zahnstangenkabel gegen Verschiebungen zu sichern, das in der entkuppelten Stellung ist.

6. Motorgetriebe nach Anspruch 5, dadurch gekennzeichnet, daß die Feststellanordnung aus Zähnen (60, 62) besteht, die in der Muffe ausgebildet sind und mit dem schraubenförmigen Gewinde des Kabels in entkuppelter Stellung zusammenwirken.

FIG.5

42

40

44

48    46

56    50    54

A

B

22

FIG.1

12

10

FIG.6

56

52

46

FIG.2

# FIG. 3

# FIG.4